# EUROPEAN PATENT APPLICATION

(11) **EP 4 219 422 A1**
(43) Date of publication of application: **02.08.2023**
(21) Application number: 22382076.2
(22) Date of filing: 31.01.2022
(51) Int. Cl.: C03C 27/02, C03B 23/045, C03B 23/09

(54) **METHOD FOR THE PRODUCTION OF A GLASS-METAL ATTACHMENT**

(71) Applicant: RIOGLASS SOLAR SCH, SL, 41870 Aznalcollar - Sevilla (ES)
(72) Inventor: AINZ IBARRONDO, Félix, E-41870 Aznalcollar, Sevilla (ES)
(74) Representative: ABG Intellectual Property Law, S.L.

(57) **Abstract**

The present invention relates to a method for the production of a glass-metal attachment for a solar receiver, the solar receiver comprising a glass tube having a diameter *Dₜ* with a thickness *eₜ* and a metal ring with a diameter *Dₐ,* and wherein the glass tube comprises two ends, the method comprising the steps of modifying the thickness et of the first end of the glass tube to a modified thickness *eₘ,* the modified thickness *eₘ* being greater than the thickness *eₜ* of the first end of the tube, and attaching the metal ring with the first end of the glass tube.

## Description

### OBJECT OF THE INVENTION

The present invention relates to a method for the production of a glass-metal attachment for a solar receiver, the solar receiver comprising a glass tube and a metal ring, wherein the glass tube comprises two ends.

Furthermore, the present invention also relates to a solar receiver comprising at least one glass-metal attachment and to a parabolic trough solar concentrator comprising at least one solar receiver thereof.

### BACKGROUND OF THE INVENTION

Solar thermal collectors are normally used in solar fields which consist of capturing solar energy with parabolic trough solar concentrators, also referred to as solar receivers, for use in electric power generation. A widely used type of these solar thermal collectors is concentrated solar power (CSP) parabolic trough collectors the purpose of which is to receive solar radiation with a high yield.

Solar thermal collectors are made up of reflective mirrors which are capable of reflecting incident solar radiation towards a line corresponding to the focal point of the trough formed by the curvature of the mirrors. Furthermore, there is located in that line corresponding to the focal point of the trough a pipe made up of a series of solar receivers in which a heat transfer fluid running across the entire surface of a solar field is transported.

Solar receivers are one of the main elements of parabolic trough concentrated solar power solar fields, also referred to as linear Fresnel receivers. Said solar receivers are mainly made up of a steel absorbing tube, a protective glass cover, a vacuum chamber, and two compensators.

The glass cover is usually connected to each compensator through a metal ring placed at each end of the tube. However, the process of attaching said glass cover with said metal ring is one of the most critical steps in manufacturing solar receivers, due to the difference in physical properties existing between both materials. To prevent residual stresses after this attachment, the use of specific glass and metal materials, as well as different connection methodologies, have been defined on the market.

If the receivers malfunction, solar field efficiency drops significantly, so it is necessary to assure the correct state of the receivers in order to ensure the yield of the solar field, and particularly the attachment between the glass elements and the metal elements. In other words, it is crucial for the vacuum chamber to maintain leak-tightness, thereby conserving the molecular transport properties, and therefore the maximum radiation capture by the steel absorbing tube.

If the vacuum is not optimum, that is, if it is not maintained or if it deteriorates, corresponding heat losses by convection and conduction increase exponentially and degradation of the receiver and its efficiency follows. Said vacuum loss usually occurs due to a crack or rupture in a part of the components of the receiver. To prevent this, the quality and robustness of each of its components, as well as of each of the processes for producing the solar receiver itself, must be ensured.

Two methodologies for connecting the glass cover and the metal ring, referred to as housekeeper and matching, are known today. In both methodologies, the glass element receives a prior treatment through uniform heating to achieve the suitable viscoelastic state of said glass the characteristic of which depends on the dimensions and characteristics of both materials.

The ideal glass-metal connection is one in which both materials have similar coefficients of expansion, such that during the heating and cooling process, both the materials heat up and cool down in a similar manner, thereby preventing the appearance of residual thermal stresses, and thereby a potential rupture of the attachment.

If the coefficients of expansion are not similar, the difficulty in making the glass-metal attachment lies in establishing a suitable balance between the dimensions and the thicknesses of the materials, such that the materials can withstand induced mechanical and thermal stresses.

When the material with a higher coefficient of expansion is very thick, the attachment will be viable, but it will break easily due to the residual stresses that remain after the attachment process. When the material is very thin, said material will readily break and/or deform, therefore it does not allow for a homogenous attachment and a reproducible method. This effect is compounded if the diameter of the receivers, and therefore the diameter of the glass tube, is increased.

There is therefore a need for an improved solar receiver manufacturing method in which the coefficient of expansion of the glass is smaller than that of the metal and in which the dimension of the metal is minimized to achieve a perfect attachment. Furthermore, ideally, the manufacturing method will focus on an additional treatment of the glass before attaching same with the metal element. Likewise, there is a need for said treatment to adapt to the physical properties of the glass and to make an optimal attachment with the metal viable.

### DESCRIPTION OF THE INVENTION

The present invention proposes a solution to the preceding problems by means of a method for the production of a glass-metal attachment for a solar receiver according to claim 1, a solar receiver according to claim 13, and a parabolic trough solar concentrator according to claim 14. The dependent claims define the preferred embodiments of the invention.

*A first inventive aspect provides a method for the production* of a *glass-metal attachment for a solar receiver, the solar receiver comprising* a *glass tube having a diameter Dₜ with a thickness eₜ and* a *metal ring with a diameter Dₐ and* a *thickness eₐ, and wherein the glass tube comprises two ends, the method comprising the steps of:*
- *modifying the thickness eₜ of the first end of the glass tube to a modified thickness eₘ, the modified thickness eₘ being greater than the thickness eₜ of the first end of the tube, and*
- *attaching the metal ring with the first end of the glass tube.*

Throughout the document, reference will be made to a solar receiver having a glass tube which constitutes the intermediate part of a solar receiver, and wherein said glass tube comprises two ends at which the method of the present invention allows the performance of an innovative treatment for attaching the glass tube with a metal ring at at least one end of the glass tube.

Furthermore, and also throughout the document, the term glass-metal attachment refers to the final step of the method in which the glass tube is attached with the metal ring, i.e., when the two materials come into contact and are fixed together permanently. Said term "glass-metal attachment" refers to the location of the attachment where both elements come into contact at each end of the glass tube where said attachment has been carried out.

The prior treatment of the glass-metal attachment, claimed in the present invention, consists of modifying the thickness *eₜ* of a first end of the glass tube until reaching a modified thickness, referred to as *eₘ*, wherein the modified thickness *eₘ* is greater than the thickness *eₜ* of the first end of the tube.

By performing said prior treatment, the attachment of the metal ring with the first end of the glass tube is performed after performing the step of the method of the first inventive aspect of the present invention in which the thickness of the first end of the glass tube is modified.

Said prior treatment preferably allows applying to the first end of the glass tube a modification of the thickness *eₜ* thereof during a glass heating process. Said process of heating the first end of the glass tube is also preferably maintained from the start until the glass-metal attachment is completed.

Advantageously, the first inventive aspect of the invention allows a glass-metal attachment in which the amount of the material with a higher coefficient of expansion is minimized in said attachment and the amount of the second material with a lower coefficient of expansion is maximized. Furthermore, said first inventive aspect of the invention allows a more robust and long-lasting attachment between the glass tube and the metal ring.

Additionally, the modification of the thickness *eₜ* and the attainment of the modified thickness *eₘ* allow the formation of a glass mass in the area of the first end of the glass tube, i.e., the edge of the glass tube. Furthermore, said glass mass reduces the viscosity of said area of the glass tube where the mass is located.

Advantageously, given that the first aspect of the invention successfully increases the thickness of the glass tube only in the area of insertion of the metal ring, i.e., at the first end of the glass tube, the invention allows increasing robustness in said area of the first end of the glass tube without having to increase the thickness in the rest of the tube, which maintains the solar transmittance properties of the solar receivers implemented previously.

*In a particular embodiment, the method for the production* of a *glass-metal attachment for* a *solar receiver according to the preceding claim, wherein the step of modifying the thickness eₜ of the first end of the glass tube to a modified thickness eₘ comprises the steps of:*
*a) arranging the glass tube rotating about its longitudinal axis X-X',*
*b) heating a first end of the glass tube, wherein the heating* of *said first end is maintained until attaching the metal ring with the first end of the glass tube,*
*c) positioning the first end of the glass tube along the longitudinal direction X-X' between a first roller and a second roller, wherein*
   *the first roller preferably comprises a first end having a diameter D*₁ *and*
   *a length L₁ and a second end having a diameter D*₂ *and* a *length L*₂*, the diameter D*₁ *of the first end being smaller than the diameter D*₂ *of*
   *the second end, with a step being formed between both, and*
   *the second roller is a cylinder having a diameter D*₃ *and a length L*₃ *configured for being arranged separated from the first roller in its initial position,*
*d) moving the second roller in the transverse direction Y-Y', wherein Y-Y' is substantially perpendicular to the longitudinal direction X-X', until the first roller and the second roller come into contact,*
*e) moving either the pair of rollers, or else the glass tube, and*/*or both along direction X-X', such that the first end of the glass tube comes into contact with the pair of rollers and continues to move in direction X-X', with the thickness eₜ of the first end of the glass tube being modified until achieving the modified thickness eₘ, the thickness eₘ being greater than the thickness eₜ of the glass tube.*

In step a) of the method for the production of a glass-metal attachment for a solar receiver, a glass tube is preferably provided rotating at a constant speed about its own longitudinal axis, X-X' until the performance of the last step of said method.

In step b), while the glass tube rotates about its longitudinal axis X-X', a first end of the glass tube is heated, and it is continuously heated until the performance of the last step of the method of the present invention.

In said step b), the heating of the glass tube while it rotates about its longitudinal axis X-X' allows uniform heating in the entire area of the first end of the glass tube and said area reaches a desired temperature so that its coefficient of viscosity changes, preferably decreases. Having a lower coefficient of viscosity facilitates the introduction of the metal ring in the last step of the method of the present invention.

In step c), the first end of the glass tube is positioned between a first roller and a second roller. The shaft of the first roller and the shaft of the second roller are preferably substantially parallel, with a specific design for encapsulating a predetermined amount of glass and for the purpose of coming into contact with said glass material. Furthermore, the pair of rollers allows giving the required final shape and dimensions to the first end of the glass tube before attachment thereof with the metal ring.

Additionally, the first roller and the second roller are rotating in an operating mode and allow a part of the first end of the glass tube to be retained between said two rollers.

In a preferred embodiment, the first roller and the second roller are located on opposite side of the diameter of the glass tube where the heating system is located such that it allows carrying out steps c) to e) while maintaining uniform heating of the glass tube.

Additionally, the first roller and the second roller allow the initial diameter of the glass tube to be maintained and prevent any deformation of the glass tube itself while carrying out the method of the invention for the production of a glass-metal attachment.

The first roller preferably comprises a first end having a diameter *D*₁ and a length *L*₁ and a second end having a diameter *D*₂ and a length *L*₂. Length *L*₂ is also preferably greater than length *L*₁.

The diameter *D*₁ of the first end is smaller than the diameter *D*₂ of the second end of the first roller and forms a step between both ends. Said step is formed by a stop or bottom, with the surface of the circle being visible from the second end, i.e., the surface not covered by the circle formed by the first end, and a section of the side surface of the cylinder of the first end.

Furthermore, the second roller is a cylinder having a uniform diameter *D*₃ and a length *L*₃. Said second roller is arranged separated from the first roller in its initial position.

In step d), the second roller is moved in the transverse direction Y-Y', substantially perpendicular to the transverse direction X-X', until the first roller and the second roller come into contact. As the second roller comes into contact with the first roller, a space demarcated on one side by the step of the first roller and on the other side by a section of the side surface of the cylinder of the second roller is formed where the step of the first roller is located.

The first roller and the second roller preferably rotate about their respective axes and in the opposite direction to allow the rolling of the two rollers while carrying out the steps of the method, and therefore both rollers are kept in contact until completing all the steps c) to e).

Furthermore, placement between the glass tube and the pair of rollers is substantially perpendicular and is fixed before introducing the glass. For example, the glass tube and the pair of rollers are fixed at 90° (+/- 15°).

In step e), the pair of rollers, or the glass tube, or both is moved along direction X-X', such that the first end of the glass tube comes into contact with the pair of rollers. In particular, the first end of the glass tube comes into contact with the bottom surface of the step formed by the diameter of the second end of the first roller.

Furthermore, the glass tube continues to move along direction X-X' until the initial thickness of the glass tube *eₜ* reaches a modified thickness *eₘ* greater than the initial thickness *eₜ*.

Advantageously, the space demarcated between the first roller and the second roller allows a plurality of modifications of the thickness of the first end of the glass tube, and therefore the adaptation of the desired modified thickness to the type of metal ring subsequently attached to the glass tube.

*In a particular embodiment, steps b) to e) are performed at at least one of the ends.*

In preferred embodiment, said steps b) to e) are performed at both ends of the glass tube.

*In a particular embodiment, in step c), the pair of rollers is positioned such that the increase in the modified thickness eₘ of the glass tube having a diameter Dₜ is directed:*
- *to the outside of the initial circumference of the glass tube, or*
- *to the inside of the initial circumference of the glass tube, or*
- *to the inside and to the outside of the initial circumference of the glass tube.*

By increasing the modified thickness *eₘ* to the inside of the initial circumference of the glass tube, the amount of glass in said area is significantly higher than the rest of the glass tube, and therefore said area is capable of withstanding the stresses induced by the metal ring when it cools down after the glass-metal attachment step.

Advantageously, the increase in the modified thickness *eₘ* of the glass tube, in addition to the reduction of the viscosity of the glass in that area, allows the glass to have increased strength in said area of modified thickness which is the area of insertion of the metal ring of the second step of the first inventive aspect of the invention.

In particular, the increase in the modified thickness *eₘ* allows the insertion of metal rings of up to 0.05 mm thick without causing additional deformations at the first end of the glass tube or at the edge of the metal ring.

Additionally, the increase in modified thickness *eₘ* allows the introduction of metal rings having a smaller thickness which reduce the residual thermal stress level after insertion.

Furthermore, by increasing the thickness at the end of the glass tube, the mass formed in said area increases the robustness and strength of the glass-metal attachment.

Advantageously, modification of the thickness of the end of the glass tube does not involve the addition of material during the manufacture of glass tubes and allows maintaining the same thickness in the rest of the glass tube. Therefore, the glass tube and the solar receiver resulting from the method do not present weight variations compared to previously implemented products.

In a preferred embodiment, the modification of thickness is equidistant with respect to the initial circumference of the glass tube. In other words, substantially the same amount of glass mass is distributed on the inside and on the outside, and therefore it withstands more expansions and more shrinkages due to the metal ring. Furthermore, an equivalent distribution of glass both on the inside and on the outside of the first end of the glass tube facilitates the insertion of the metal ring since the glass having a modified thickness is softer and is homogenously supported by the non-modified cold glass of the rest of the glass tube, which has a greater hardness.

*In a particular embodiment, the modified thickness eₘ increases the thickness eₜ of the first end of the glass tube between 30% and 130%, more preferably 60%.*

Advantageously, the modified thickness *eₘ* increases the thickness *eₜ* of the first end of the glass tube between 30% and 130%, such that the first end of the glass tube can be attached to a wide range of metal rings having a varying diameter and/or thickness.

*In a particular embodiment, in step b), the heating of the first end of the glass tube extends over a length L_{c} comprised between [0 mm; 5 mm].*

Advantageously, the heating of the first end of the glass tube is performed over a length *L_{c}* which allows including sufficient glass material to form the required mass at the first end of the glass tube in order to carry out the glass-metal attachment of the first inventive aspect of the invention.

*In a particular embodiment, in step b), the glass tube is heated until reaching a temperature comprised between [1100°C; 1300°C], preferably between [1180°C; 1220°C].*

*In a particular embodiment, the step of attaching the metal ring with the first end of the glass tube comprises the steps of:*
*f) positioning at the first end of the glass tube diameter calibration means configured for modifying the diameter of the end of the glass tube, and*
*g) attaching the metal ring with the first end of the glass tube.*

In a preferred embodiment, before attaching the metal ring with the first end of the glass tube, diameter calibration means with a circular profile and a flat outer surface configured for modifying the diameter of the first end of the glass tube are positioned.

*In a particular embodiment, the glass tube and the metal ring rotate at a rotational speed of between 40 and 100 rpm, preferably between* 53 *and 73 rpm, and* a *translational speed of between 2 and 15 mm*/*s, preferably 9 mm*/*s.*

*In a particular embodiment, the calibration means for calibrating the modified outer diameter of the glass tube are kept in contact with the glass during the process of attaching with the metal ring.*

Advantageously, the calibration means for calibrating the outer diameter of the glass tube allow maintaining and controlling the variations in thickness of the first end of the glass tube as the glass tube and the metal ring come into contact.

In a preferred embodiment, the calibration means for calibrating the outer diameter of the glass tube are in constant contact with the glass until all the steps of the method for the production of a glass-metal attachment are performed.

*In a particular embodiment, the glass tube is a cylinder with given geometrical specifications and made* of a *glass material, preferably borosilicate type* 1 *glass material.*

In a preferred embodiment, the glass tube is a cylinder with a high transmittance the chemical and physical properties of which determine the definition and the selection of the parameters of the process of attaching the first end of the glass tube with the metal ring.

Additionally, the physical and chemical properties of the glass tube provide it with optimal optical characteristics, where solar transmittance values above 92% can be achieved.

*In a particular embodiment, the metal ring is made of stainless steel alloys or Co-Ni alloys, preferably Kovar*

In one embodiment, the metal ring is a cylindrical part with a given geometric design and a specific chemical composition to reconcile the stresses due to the different coefficients of thermal expansion and different temperatures with respect to the glass tube, during and after the process of attaching the glass tube with said ring.

Preferably, the thickness of the metal ring is comprised between 0.08 mm and 0.8 mm.

*In a particular embodiment, the coefficient of expansion of the glass α_{V} is less than or equal to the coefficient of expansion of the metal α_{M} when the step of attaching the metal ring with the first end of the glass tube is performed.*

By having different coefficients of expansion, changes in temperature induce dimensional variations which generate stresses. The increase in thickness of the first end of the glass tube contributes to making said first end of the glass tube more robust and therefore capable of withstanding the stresses induced by the metal, keeping the attachment of both stable.

In a preferred embodiment and since glass is a non-Newtonian fluid, before the step of attaching the metal ring with the first end of the glass tube, the viscosity of the first end of the glass tube has been significantly reduced.

The evolution of the viscosity of the first end of the glass tube, in this case the reduction thereof, results from the change in thickness of the first end of the glass tube and from the actuation of the pair of rollers on a non-Newtonian fluid.

This reduction of viscosity allows ensuring the penetration of the metal ring into the glass mass and optimizes the glass-metal attachment step, which results in an improvement of said glass-metal attachment with respect to methods that predate the method of the present invention and a reduced probability of said glass-metal breaking once the solar receiver obtained with the present method is in operation.

*A second inventive aspect of the invention provides a solar receiver comprising at least one glass-metal attachment according to any of the preceding claims.*

The solar receiver which comprises at least one glass-metal attachment according to the method of the first aspect of the invention, preferably at both ends of the glass tube, has the same dimensions (diameter, thickness, etc.) as the solar receivers that are in operation today, and therefore has at least the same technical features.

Furthermore, the solar receiver obtained by means of the method of the first inventive aspect of the invention does not present weight variations compared to the solar receivers that are in operation today since the method of the first inventive aspect consists of forming a mass at at least one of the ends of the glass tube without adding more glass material.

Advantageously, in addition to having the technical features of the solar receivers that are in operation today, the solar receiver comprising at least one glass-metal attachment according to the first inventive aspect of the invention offers higher strength and reduces the probability of breaking in the glass-metal attachment areas.

Additionally, the first aspect of the invention allows increasing the robustness at the first end of the glass tube of a solar receiver when performing a glass-metal attachment without having to increase the thickness in the rest of the tube, and this provides greater solar transmittance of the glass tube and therefore maintains the range of efficiency required for the implementation of a solar receiver in a parabolic trough solar concentrator.

Advantageously, the solar receiver obtained from the method of the invention is a balanced homogeneous product having two glass-metal attachments of the type of the first inventive aspect which enhance the efficiency of the product once it is in operation and reduce the probability of breaking.

*A third inventive aspect of the invention provides a parabolic trough or Fresnel solar concentrator comprising at least one solar receiver according to the second inventive aspect of the invention.*

The solar concentrator comprising at least one solar receiver according to the second inventive aspect of the invention has a longer service life than the devices used previously and a reduced possibility of the elements thereof breaking, therefore increasing the quality and overall efficiency of the parabolic trough solar concentrator.

All the features and/or method steps described in this specification (including the claims, description, and drawings) can be combined in any combination, with the exception of combinations of such mutually exclusive features.

### DESCRIPTION OF THE DRAWINGS

These and other features and advantages of the invention will be more clearly understood based on the following detailed description of a preferred embodiment provided solely by way of non-limiting illustrative example in reference to the attached figures.
Figure 1 shows an embodiment of the first roller and the second roller according to the invention.
Figure 2 shows a top view of the embodiment of the first roller and the second roller according to the invention.
Figure 3 shows a section view of an embodiment of modifying the thickness of a first end of a glass tube according to the invention.
Figure 4 shows a section view of an embodiment of attaching a metal ring with a first end of a glass tube with a modified thickness according to the invention.
Figure 5 shows a profile view of an embodiment before attaching a metal ring with a first end of a glass tube with a modified thickness according to the invention.

### DETAILED DESCRIPTION OF THE INVENTION

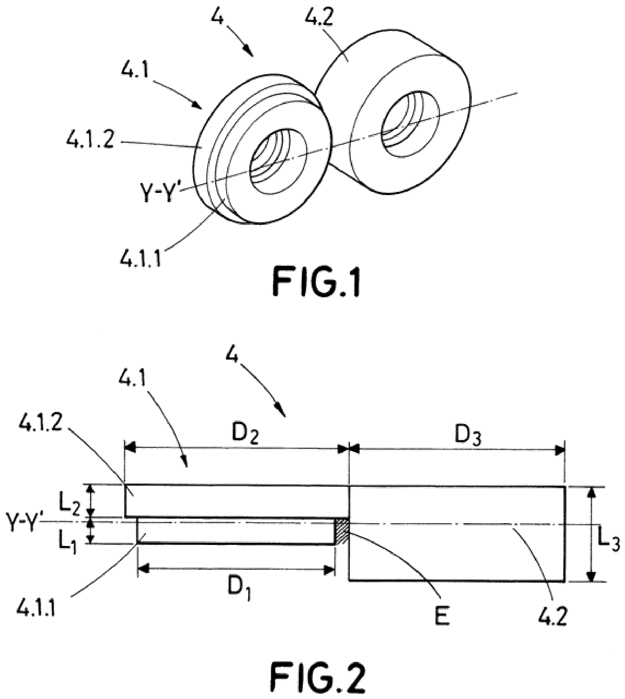

Figure 1 shows an embodiment of a pair of rollers (4) implemented in steps c) to e) of the method of claim 2 of the invention, the pair of rollers (4) comprising a first roller (4.1) and a second roller (4.2). In particular, Figure 1 shows step d) of the method claimed in claim 2 in which the second roller (4.2) is moved in the transverse direction Y-Y' until the first roller (4.1) and the second roller (4.2) come into contact.

In one embodiment, the first roller (4.1) of the pair of rollers (4) comprises two ends (4.1.1, 4.1.2). Each of the two ends, the first end (4.1.1) and the second end (4.1.2), have different diameters.

The diameter of the first end (4.1.1) of the first roller (4.1) is preferably smaller than the diameter of the second end (4.1.2.) of the first roller (4.1) itself.

The second roller (4.2) is also preferably a roller having a uniform diameter.

Figure 2 shows a top view of an embodiment of the pair of rollers (4). In particular, the first roller (4.1) has a first end (4.1.1) having a diameter *D*₁ and a length *L*₁ and a second end (4.1.2) having a diameter *D*₂ and a length *L*₂.

Preferably, diameter *D*₁ is smaller than diameter *D*₂ and length *L*₂ is greater than length *L*₁.

With diameter *D*₁ being smaller than diameter *D*₂, the first roller (4.1) of the pair of rollers (4) forms a step (E). In the embodiment of Figure 2, when step d) of claim 2 of the invention is carried out, the first roller (4.1) and the second roller (4.2) come into contact. In particular, the surface of the second end (4.1.2) of the first roller (4.1) comes into in contact with the surface of the second roller (4.2).

Furthermore, the second roller (4.2) of the pair of rollers (4) has a uniform diameter *D*₃ and a length *L*₃. Length *L*₃ of the second roller (4.2) is preferably greater than the sum of the two lengths *L*₁ and *L*₂.

In step e) according to claim 2 of the invention, the step (E) is adapted for housing a first end of a previously heated glass tube (not shown in this figure). By housing said first end of the glass tube, the thickness of the first end of the tube glass is modified when it comes into contact with the projecting surface of diameter *D*₂ of the second end (4.1.2) of the first roller (4.1) defining the bottom of the step (E). Upon coming into contact with said surface, a glass mass is formed in the area of the first end of the glass tube which comes into contact with the pair of rollers (4).

In a preferred embodiment, the glass tube is a cylinder made of a glass material, preferably borosilicate type 1 glass material.

In another preferred embodiment, the glass tube is previously heated until reaching a temperature comprised between [1100°C; 1300°C], preferably between [1180°C; 1220°C].

Each roller (4.1, 4.2) of the pair of rollers (4) is preferably rotating about its respective axes when performing steps c) to e) of the method of the invention.

In another preferred embodiment, the coefficient of expansion of the glass α_{V} is less than or equal to the coefficient of expansion of the metal α_{M} before performing the step of attaching the metal ring with the first end of the glass tube.

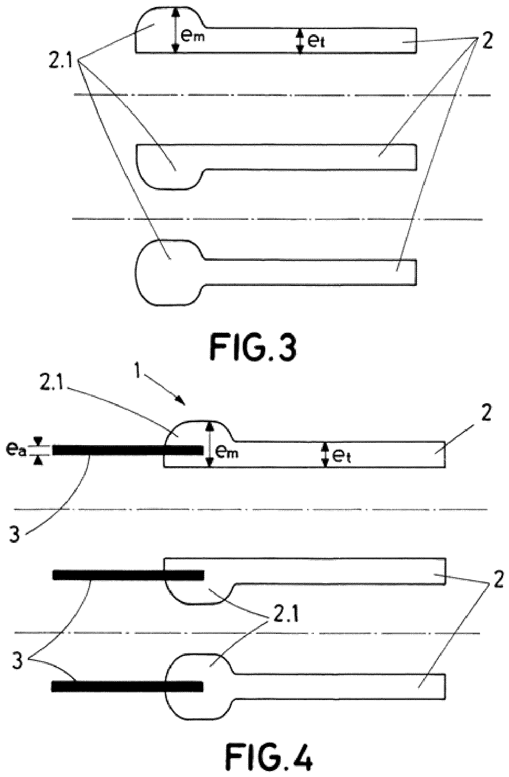

Figure 3 shows different embodiments of the modified thickness *eₘ* of the first end (2.1) of a glass tube (2), in which the glass tube (2) has an initial thickness *eₜ*. In the embodiment shown in the upper part of Figure 3, the initial thickness *eₜ* is modified to a modified thickness *eₘ* and the modification is directed to the outside of the diameter of the glass tube (2). In the embodiment shown in the middle part of Figure 3, the initial thickness *eₜ* is modified to a modified thickness *eₘ* and the modification is directed to the inside of the diameter of the glass tube (2). In the embodiment shown in the lower part of Figure 3, the initial thickness *eₜ* is modified to a modified thickness *eₘ* and the modification is directed both to the outside and to the inside of the diameter of the glass tube (2).

Figure 4 shows the section views of several embodiments of the glass-metal attachment (1) obtained from the method claimed in the present invention. In each of the embodiments, the modified thickness *eₘ* of the first end (2.1) of the glass tube (2) is directed to the outside, the inside, or in both directions of the diameter of the glass tube (2). In each of the different embodiments of modifying the thickness of the first end (2.1) of the glass tube (2), a metal ring (3) having a thickness *eₐ* is introduced in said area (2.1) with a modified thickness *eₘ.*

The thickness *eₐ* of the metal ring (3) is preferably smaller than the modified thickness *eₘ.*

In a preferred embodiment, the modified thickness *eₘ* increases the thickness *eₜ* of the first end (2.1) of the glass tube (2) between 30% and 130%, more preferably 60%.

The steps of the method claimed in the present invention are preferably carried out at at least one of the ends (2.1) of the glass tube (2). The thickness *eₜ* of the glass tube (2) is more preferably modified at both ends of the glass tube (2).

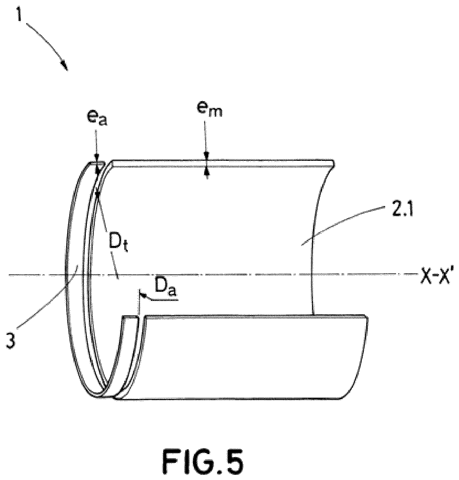

Figure 5 shows a profile view of the glass-metal attachment (1) between a metal ring (3) having a thickness *eₐ* and a diameter *Dₐ*, and the first end (2.1) of a glass tube (2) having a modified thickness *eₘ* and a diameter *Dₜ.*

## Claims

1. Method for the production of a glass-metal attachment (1) for a solar receiver, the solar receiver comprising a glass tube (2) having a diameter *Dₜ* with a thickness *eₜ* and a metal ring (3) with a diameter *Dₐ* and a thickness *eₐ*, and wherein the glass tube (2) comprises two ends (2.1, 2.2), the method comprising the steps of:
- modifying the thickness eₜ of the first end (2.1) of the glass tube (2) to a modified thickness *eₘ*, the modified thickness *eₘ* being greater than the thickness eₜ of the first end of the tube (2.1), and
- attaching the metal ring with the first end of the glass tube.

2. Method for the production of a glass-metal attachment (1) for a solar receiver according to the preceding claim, wherein the step of modifying the thickness *eₘ* of the first end (2.1) of the glass tube (2) to a modified thickness *eₘ* comprises the steps of:
a) arranging the glass tube (2) rotating about its longitudinal axis X-X',
b) heating a first end (2.1) of the glass tube (2), wherein the heating of said first end (2.1) is maintained until the metal ring (3) is attached with the first end (2.1) of the glass tube (2),
c) positioning the first end (2.1) of the glass tube (2) along the longitudinal direction X-X' between a first roller (4.1) and a second roller (4.2), wherein
the first roller (4.1) preferably comprises a first end (4.1.1) having a diameter *D*₁ and a length *L*₁ and a second end (4.1.2) having a diameter *D*₂ and a length *L*₂ ,
the diameter *D*₁ of the first end (4.1.1) being smaller than the diameter *D*₂ of the second end (4.1.2), with a step (E) being formed between both, and
the second roller (4.1.2) is a cylinder having a diameter *D*₃ and a length *L*₃ configured for being arranged separated from the first roller (4.1) in its initial position.
d) moving the second roller (4.2) in the transverse direction Y-Y', wherein Y-Y' is substantially perpendicular to the longitudinal direction X-X', until the first roller (4.1) and the second roller (4.2) come into contact,
e) moving either the pair of rollers (4), or else the glass tube (2), and/or both along direction X-X', such that the first end (2.1) of the glass tube (2) comes into contact with the pair of rollers (4) and continues to move in direction X-X' with the thickness eₜ of the first end (2.1) of the glass tube (2) being modified until achieving the modified thickness *eₘ*, the thickness *eₘ* being greater than the thickness eₜ of the glass tube (2).

3. Method for the production of a glass-metal attachment (1) for a solar receiver according to the preceding claim, wherein steps b) to e) are performed at at least one of the ends (2.1, 2.2).

4. Method for the production of a glass-metal attachment (1) for a solar receiver according to any of claims 2 or 3, wherein in step c), the pair of rollers (4) is positioned such that the increase in the modified thickness *eₘ* of the glass tube (2) having a diameter *Dₜ* is directed:
- to the outside of the initial circumference of the glass tube (2), or
- to the inside of the initial circumference of the glass tube (2), or
- to the inside and to the outside of the initial circumference of the glass tube (2).

5. Method for the production of a glass-metal attachment (1) for a solar receiver according to any of the preceding claims, wherein the modified thickness *eₘ* increases the thickness *eₜ* of the first end (2.1) of the glass tube (2) between 30% and 130%, more preferably 60%.

6. Method for the production of a glass-metal attachment (1) for a solar receiver according to any of claims 2 to 5, wherein in step b), the heating of the first end (2.1) of the glass tube (2) extends over a length *L_{c}* comprised between [0 mm; 5 mm].

7. Method for the production of a glass-metal attachment (1) for a solar receiver according to any of claims 2 to 6, wherein in step b), the glass tube (2) is heated until reaching a temperature comprised between [1100°C; 1300°C], preferably between [1180°C; 1220°C].

8. Method for the production of a glass-metal attachment (1) for a solar receiver according to any of the preceding claims, wherein the step of attaching the metal ring (3) with the first end (2.1) of the glass tube (2) comprises the steps of:
f) positioning at the first end (2.1) of the glass tube (2) diameter calibration means configured for modifying the diameter of the first end (2.1) of the glass tube (2), and
g) attaching the metal ring (3) with the first end (2.1) of the glass tube (2).

9. Method for the production of a glass-metal attachment (1) for a solar receiver according to any of claims 2 to 8, wherein the glass tube (2) and the metal ring (3), rotate at a rotational speed of between 40 and 100 rpm, preferably between 53 and 73 rpm, and a translational speed of between 2 and 15 mm/s, preferably 9 mm/s

10. Method for the production of a glass-metal attachment (1) for a solar receiver according to any of the preceding claims, wherein the calibration means for calibrating the modified outer diameter of the glass tube (2) are kept in contact with the glass during the process of attaching with the metal ring (3).

11. Method for the production of a glass-metal attachment (1) for a solar receiver according to any of the preceding claims, wherein the glass tube (2) is a cylinder made of a glass material, preferably borosilicate type 1.

12. Method for the production of a glass-metal attachment (1) for a solar receiver according to any of the preceding claims, wherein the metal ring (3) is made of stainless steel alloys or Co-Ni alloys, preferably Kovar.

13. Method for the production of a glass-metal attachment (1) for a solar receiver according to any of the preceding claims, wherein the coefficient of expansion of the glass αᵥ is less than or equal to the coefficient of expansion of the metal α_{M} when the step of attaching the metal ring (3) with the first end (2.1) of the glass tube (2) is performed.

14. A solar receiver comprising at least one glass-metal attachment according to any of the preceding claims.

15. A parabolic trough or Fresnel solar concentrator comprising at least one solar receiver according to claim 14.
